# EUROPEAN PATENT APPLICATION

(11) **EP 4 439 324 A1**
(43) Date of publication of application: **02.10.2024**
(21) Application number: 24166238.6
(22) Date of filing: 26.03.2024
(51) Int. Cl.: G06F 13/42

(54) **UNIVERSAL COMMUNICATION NODE**

(30) Priority: 27.03.2023 IN 202341021884; 15.06.2023 US 202318335333
(71) Applicant: B/E Aerospace, Inc., Winston-Salem, NC 27105 (US)
(72) Inventor: BAKER, Bryce C., Raymore (US); VEERAYYA, Shivashankar Maddanimath, Bangalore (IN); SHRIKHANDE, Ashish, Bangalore (IN)
(74) Representative: Dehns

(57) **Abstract**

A universal communication device (300) is disclosed herein. In various embodiments, the universal communication device (300) comprises: a first fiber connector (313) including a first positive analog input port (321) and a first negative analog input port (322); a second fiber connector (314) including a second positive analog input port (323) and a second negative analog input port (324); a serial peripheral interface (SPI) port (311); an inter-integrated circuit (I2C) port (312); a first output port; and a controller (301) in electrical communication with the first fiber connector (313), the second fiber connector (314), the SPI port (311), the I2C port (312), and the first output port.

## Description

### CROSS-REFERENCE TO RELATED APPLICATIONS

This application claims priority to, and the benefit of, India Provisional Patent Application No. 202341021884, filed March 27, 2023 (DAS Code 98DD) and titled "UNIVERSAL COMMUNICATION NODE," which is incorporated by reference herein in its entirety for all purposes.

### FIELD

The present disclosure generally relates to electronic communication systems, and more particularly to universal communication devices for use in electronic communication systems on-board an aircraft

### BACKGROUND

A connected aircraft may rely on a central controller to manage multiple interior subsystems or perform prognostic health monitoring. These subsystems may be distributed throughout the aircraft. However, these subsystems may utilize sensors that communicate with a local controller (or any other separate controller) of the subsystem that is independent of the central controller. In this regard, sensors of various subsystems are connected to separate systems and controllers.

### SUMMARY

A universal communication device is disclosed herein. In various embodiments, the universal communication device comprises: a first fiber connector including a first positive analog input port and a first negative analog input port; a second fiber connector including a second positive analog input port and a second negative analog input port; a serial peripheral interface (SPI) port; an inter-integrated circuit (I2C) port; a first output port; and a controller in electrical communication with the first fiber connector, the second fiber connector, the SPI port, the I2C port, and the first output port.

In various embodiments, the controller is configured to: receive a testing command from a central controller; receive sensor data in response to a sensor being triggered; and transmit the sensor data to the central controller. In various embodiments, the controller is further configured to: receive a monitor command from the central controller; and monitor a sensor trigger pattern of the sensor in response to receiving the monitor command. In various embodiments, the controller is further configured to transmit the sensor trigger pattern of the sensor to the central controller. In various embodiments, the universal communication device is configured to transmit the sensor trigger pattern through the first output port.

In various embodiments, the first output port is a wireless output port. In various embodiments, the universal communication device further comprises a second output port, the second output port comprising a serial output port.

An article of manufacture is disclosed herein. In various embodiments, the article of manufacture includes a tangible, non-transitory memory configured to communicate with a processor, the tangible, non-transitory memory having instructions stored thereon that, in response to execution by the processor, cause the processor to perform operations comprising: receiving, by the processor, sensor data from a universal communication node; comparing, by the processor, the sensor data to an attribute table corresponding to a plurality of sub-systems of an aircraft; and identifying, by the processor, a sub-system in the plurality of sub-systems corresponding to the universal communication node.

In various embodiments, the identifying the sub-system is based on matching the sensor data to the sub-system in the attribute table.

In various embodiments, the operations further comprise configuring, by the processor, the universal communication node for a control panel in an aircraft cabin.

In various embodiments, in response to the processor not finding a match in the attribute table to the sensor data, the processor identifies the sub-system in the plurality of sub-systems based on a pattern of sensor triggers received from a sensor electrically coupled to the universal communication node.

In various embodiments, the operations further comprise receiving, by the processor, a command to configure the universal communication node prior to receiving the sensor data.

In various embodiments, the operations further comprise commanding, by the processor, testing of the universal communication node prior to receiving the sensor data.

In various embodiments, the attribute table includes expected attributes for each sub-system in the plurality of sub-systems in the aircraft.

An article of manufacture is disclosed herein. In various embodiments, the article of manufacture includes a tangible, non-transitory memory configured to communicate with a processor, the tangible, non-transitory memory having instructions stored thereon that, in response to execution by the processor, cause the processor to perform operations comprising: receiving, by a local controller, a testing command; transmitting, by the local controller, test data from the local controller to a central controller; and in response to transmitting the test data to the central controller, a sub-system in an aircraft cabin is identified by the central controller.

In various embodiments, the local controller is configured by the central controller in response to the central controller identifying the sub-system.

In various embodiments, the test data is received from a sensor coupled to the local controller. In various embodiments, the test data includes sensor triggers of the sensor.

In various embodiments, the operations further comprise receiving a monitoring command from the central controller in response to the central controller being unable to identify the sub-system based on the test data. In various embodiments, the local controller transmits sensor triggers of a sensor coupled to the local controller to the central controller in response to receiving the monitoring command.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a front view of an aircraft, in accordance with various embodiments.
FIG. 2 illustrates a universal central control system for an aircraft cabin of an aircraft, in accordance with various embodiments.
FIG. 3 illustrates a universal communication device for an aircraft cabin of an aircraft, in accordance with various embodiments.
FIG. 4 illustrates a process performed by a universal central control system, in accordance with various embodiments.
FIG. 5 illustrates a process performed by a universal communication device, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

In various embodiments, systems and methods for connecting sensors in subsystems of an aircraft to a central controller can facilitate a fully connected aircraft (i.e., where each sensor communicates with a central controller of the aircraft). In various embodiments, the systems and methods for of connecting various sensors can also facilitate connection of third-party devices to the central controller, while maintaining a secure connection, in accordance with various embodiments. In various embodiments, the universal communication device disclosed herein can further facilitate retrofitting current systems to support prognostics and health management ("PHM"), as described further herein.

A universal communication node ("UCN") is disclosed herein. In various embodiments, the UCN enables sensors and devices to communicate with a central controller managing multiple interiors systems of an aircraft. In various embodiments, the UCN has limited input capability. In various embodiments, the UCN has at least one analog port, a serial peripheral interface ("SPI"), and an electronic communication port (e.g., an I2C port). In various embodiments, the UCN can include a serial port and wireless port(s). The serial port may be configured for input or output. When configured for input, the output is wireless, and vice versa. The UCN can be stacked or installed side-by-side to increase the number of inputs to achieve extra capacity as desired. The UCN would be able to be configured from the central controller via a smart data loading application, in accordance with various embodiments. The UCN can use standard communication protocols. In this regard, the UCN can be used to connect third party or OEM devices to the central controller.

In various embodiments, creating an interior of an aircraft cabin capable of being controlled / monitored by a single central controller can reduce costs and components, and/or facilitate additional capacity as desired. In various embodiments, the UCN disclosed herein can allow different sub-system sensors and/or third part devices to communicate with the central controller of the aircraft cabin. In various embodiments, the UCN can incorporate a modular design that allows more for multiple UCNs to be used for additional capacity. The UCN disclosed herein can be used regardless of a respective sensor, which minimizes part number, maximizes reuse and/or allows for improved volume pricing of components, in accordance with various embodiments.

In various embodiments, the UCN disclosed herein enables sensors and devices to communicate with the central controller for an aircraft system. In various embodiments, the UCN is able to communicate with the central controller via wireless or wired serial connection. In various embodiments, wired serial communication can be a control area network ("CAN"), recommended standard # 485 ("RS-485"), or some other widely recognized standard. In various embodiments, the UCN can have two to four analog inputs, one SPI input, and one I2C input. In various embodiments, the UCN is configurable by the processes described herein.

In various embodiments, a local controller of the UCN is configured to allow a central controller to configure the UCN for a specific system. In this regard, the local controller can facilitate configuration of the system from a single point of access rather than having to configure the UCN separately at the install location, in accordance with various embodiments.

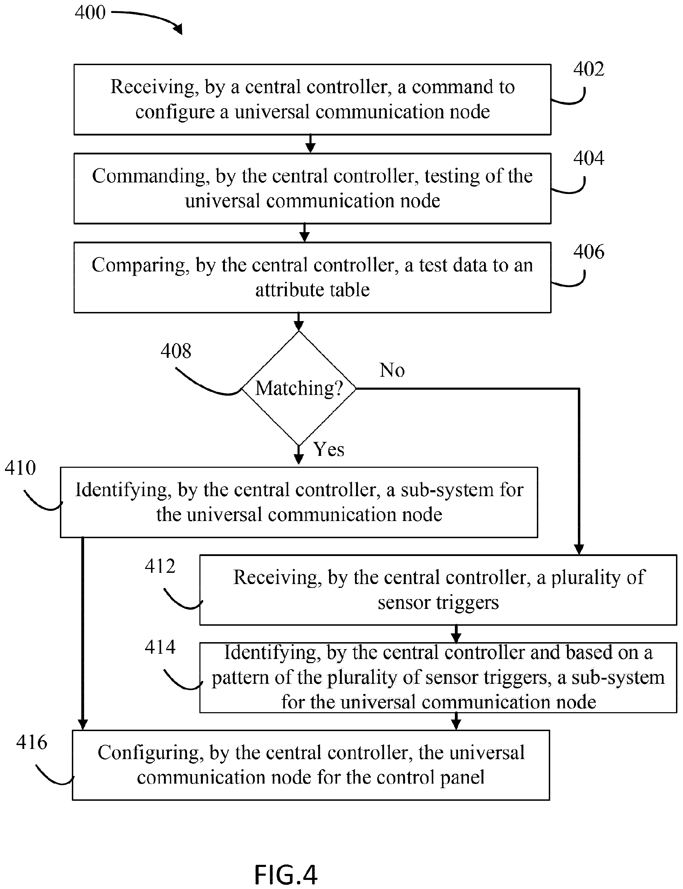

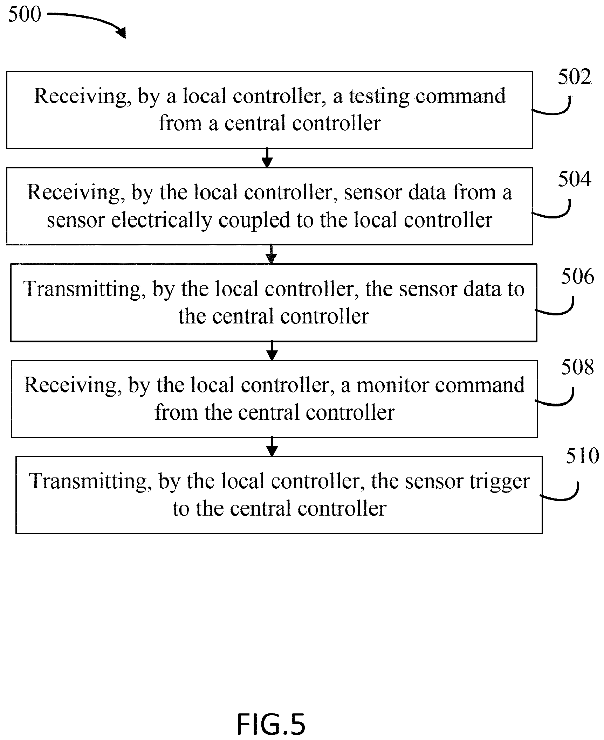

In various embodiments, configuration of a UCN disclosed herein can be achieved through smart data loading (i.e., process 400 from FIG. 4 and process 500 from FIG. 5), which can automatically identify the correct UCN for data loading. In various embodiments, a UCN can be made up of several platform devices to maximize re-use and flexibility within a system. In various embodiments, the UCN can be stacked or installed side-by-side at a device location to expand functionality. In various embodiments, the customization for a device or system comes with adding more UCNs and not in creating unique boards for every device resulting in new qualification efforts.

Analog signal conditions can be composed of a low pass filter and amplifier circuit. A filter cutoff frequency and amplifier gain would be configurable.

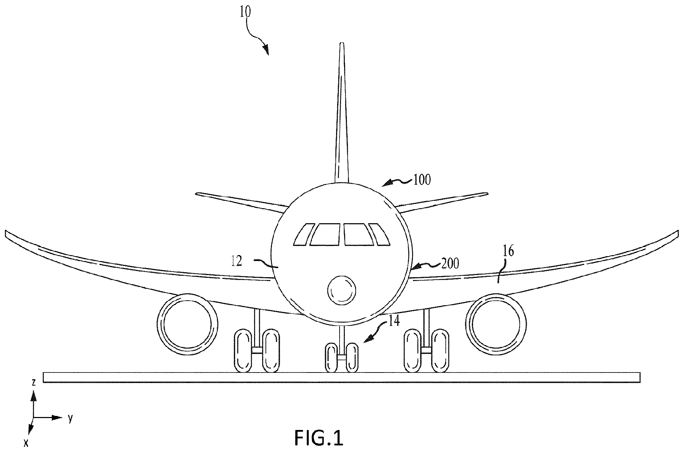

With reference to FIG. 1, a front view of an aircraft 10 is illustrated, in accordance with various embodiments. The aircraft 10 comprises a fuselage 12 and wings 16 extending outward from the fuselage 12. The wings 16 are designed and configured to produce a lift force in response to a pressure difference generated by the wings 16 exceeding a weight of the aircraft 10. The aircraft 10 can comprise landing gear 14 configured to be deployed for landing and used during taxi, or the like. The fuselage 12 defines an aircraft cabin 100 therein. The aircraft cabin 100 includes seats for passengers, a cockpit for pilot(s), various lavatories, as well as various electronics. For example, electronics within an aircraft cabin 100 can include coffee maker(s), passenger service units (PSUs), passenger address (PA) systems, galley equipment, such as beverage makers, cookers, refrigeration units, etc., in-flight entertainment, such as personal video devices (i.e., computers) or the like, satellite systems (e.g., WiFi), or the like. In various embodiments, the aircraft cabin 100 can further include electronics for sub-systems. For example, the aircraft cabin 100 can include various sensors for an evacuation system (i.e., for monitoring the evacuation system), sensors for monitoring an aircraft environment (e.g., a cabin pressure, an air quality, etc.), or the like. The present disclosure is not limited in this regard.

In various embodiments, the aircraft cabin 100 includes a universal control system 200. In this regard, various electronics in the aircraft cabin 100 can be electronically coupled to a central controller of the universal control system 200, as described further herein. In this regard, the universal control system 200 can facilitate a single central control for all (or a majority) of electronics disposed in, or around, an aircraft cabin 100, as described further herein.

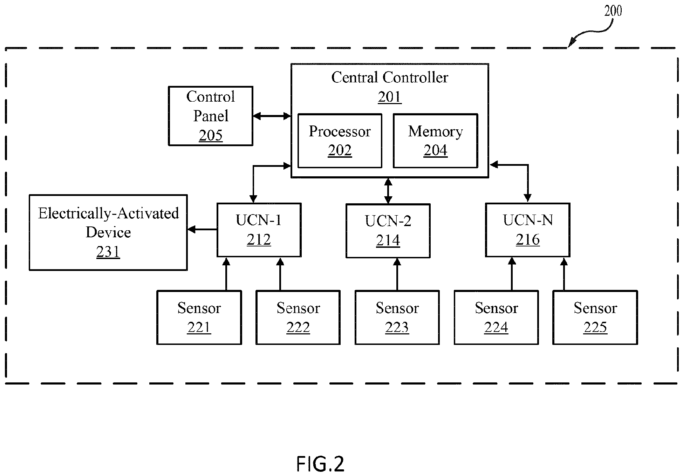

Referring now to FIG. 2, a schematic view of a universal control system 200 for an aircraft cabin 100 of an aircraft 10 from FIG. 1 is illustrated, in accordance with various embodiments. The universal control system 200 comprises a central controller 201, a control panel 205, a plurality of UCNs (e.g., UCN-1 212, UCN-2 214, UCN-N 216, etc.), a plurality of sensors (e.g., sensors 221, 222, 223, 224, 225, etc.), and/or an electrically activated device 231. In various embodiments, the central controller 201 is in electronic communication (e.g., wireless or wired communication) with the control panel 205 and each UCN (e.g., UCN-1 212, UCN-2 214, UCN-N 216). In various embodiments, the universal control system 200 can include as few as one UCN and as many as 100 UCNs and be within the scope of this disclosure.

In various embodiments, the central controller 201 is configured as a central network element or hub to various systems and components of the universal control system 200. In various embodiments, the central controller 201 comprises a processor (e.g., processor 202). In various embodiments, the central controller 201 may be implemented as a single controller (e.g., via a single processor 202 and associated memory 204). In various embodiments, the central controller 201 may be implemented as multiple processors (e.g., a main processor and local processors for various components). The central controller 201 can be a general-purpose processor, a digital signal processor (DSP), an application specific integrated circuit (ASIC), a field programable gate array (FPGA) or other programable logic device, discrete gate or transistor logic, discrete hardware components, or any combination thereof. The central controller 201 may comprise a processor 202 configured to implement various logical operations in response to execution of instructions, for example, instructions stored on a non-transitory, tangible, computer-readable medium (e.g., memory 204) configured to communicate with the central controller 201. System program instructions and/or controller instructions may be loaded onto a non-transitory, tangible computer-readable medium (e.g., memory 204) having instructions stored thereon that, in response to execution by a central controller 201, cause the central controller 201 to perform various operations.

In various embodiments, each UCN in the plurality of UCNs is electrically coupled to at least one sensor (e.g., sensors 221, 222 for UCN-1 212, sensor 223 for UCN-2 214, sensors 224, 225 for UCN-N 216). In various embodiments, the sensors 221, 222, 223, 224, 225 can be any sensor that is a component of a sub-system of an aircraft cabin, in accordance with various embodiments. For example, a sensor in the sensors 221, 222, 223, 224, 225 can be a sensor of a lavatory sub-system, a service cart tracking subsystem, a health monitoring system (e.g., water supply monitoring, inventory monitoring, etc.), water devices, a safety system, passenger seat systems, etc. The present disclosure is not limited in this regard. In various embodiments, a sensor in the sensors 221, 222, 223, 224, 225 can be a sensor a pressure sensor (e.g., for aircraft cabin pressure, for water pressure, for evacuation system pressure, etc.), a temperature sensor (e.g., for aircraft cabin temperature, etc.), an occupancy sensor (e.g., for a lavatory, a passenger seat, etc.), a motion sensor (for a lavatory, a passenger seat, etc.), a position sensor (e.g., for a galley or inventory monitoring system, etc.), a level sensor (e.g., for a potable water system, etc.), humidity sensors (e.g., for cabin environment monitoring, etc.), or the like. In various embodiments, a UCN in the plurality of UCNs can be coupled to an electrically activated device (e.g., UCN-1 212 is electrically coupled to electrically activated device 231). For example, for a lavatory, an electrically activated device 231 can comprise a light indicating the lavatory is occupied or unoccupied. For a health monitoring system, an electrically activated device 231 can comprise a warning light to indicate a pressure is low for an evacuation system, a potable water system is near full, or the like. The present disclosure is not limited in this regard.

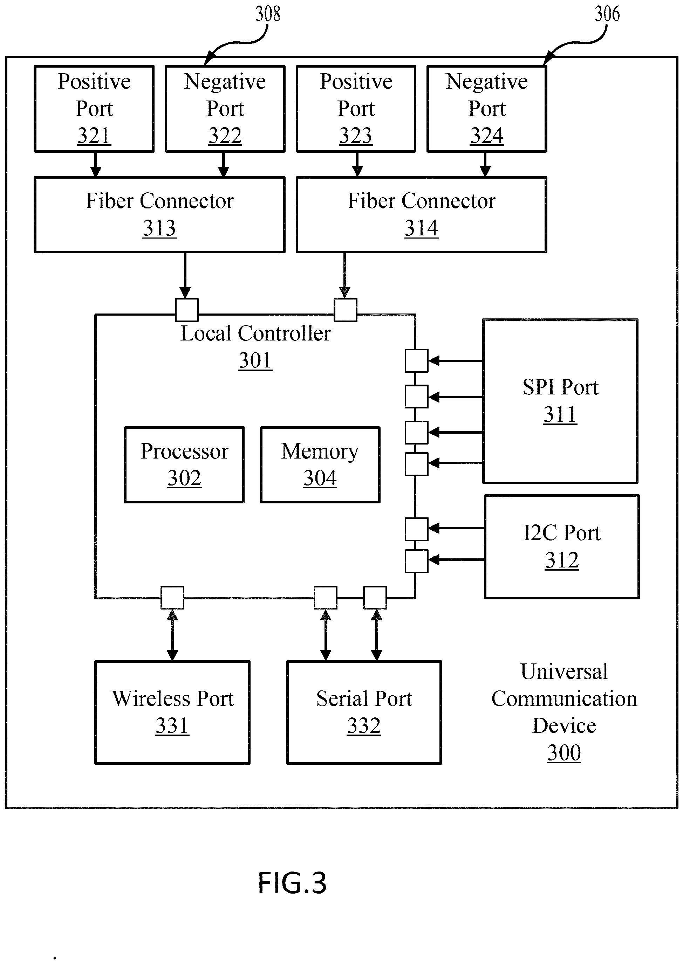

Referring now to FIG. 3, a universal communication device 300 for use in the universal control system 200 from FIG. 2 (e.g., as any of UCN-1 212, UCN-2 214, UCN-N 216, etc.), is illustrated, in accordance with various embodiments. The universal communication device 300 comprises a local controller 301.

In various embodiments, the local controller 301 is configured as a central network element or hub to various systems and components of the universal communication device 300. In various embodiments, local controller 301 comprises a processor (e.g., processor 302). In various embodiments, local controller 301 may be implemented as a single controller (e.g., via a single processor 302 and associated memory 304). In various embodiments, local controller 301 may be implemented as multiple processors (e.g., a main processor and local processors for various components). The local controller 301 can be a general-purpose processor, a digital signal processor (DSP), an application specific integrated circuit (ASIC), a field programable gate array (FPGA) or other programable logic device, discrete gate or transistor logic, discrete hardware components, or any combination thereof. The local controller 301 may comprise a processor 302 configured to implement various logical operations in response to execution of instructions, for example, instructions stored on a non-transitory, tangible, computer-readable medium (e.g., memory 304) configured to communicate with the local controller 301. System program instructions and/or controller instructions may be loaded onto a non-transitory, tangible computer-readable medium (e.g., memory 304) having instructions stored thereon that, in response to execution by a local controller 301, cause the local controller 301 to perform various operations.

In various embodiments, the universal communication device 300 is configured to communicate with the central controller 201 of a universal control system 200 (as shown in FIG. 2) of an aircraft cabin 100 of an aircraft (as shown in FIG. 1) (e.g., via a wired or wireless connection). In this regard, the universal communication device 300 can comprise a wireless port 331 (e.g., a wireless input / output port) and a serial port 332 (e.g., a serial input / output port, a serial output port, or the like). In various embodiments, the wireless port 331 is a network port that is configured to connect a wireless access point (e.g., of the universal communication device 300), to a wired network (e.g., of the universal control system 200 from FIG. 2). In various embodiments, such information may be communicated between the universal communication device 300 and the central controller 201 from FIG. 2 by use of a network in the aircraft 10 from FIG. 1 (e.g., through any network, such as a local area network (LAN), or wide area network (WAN) such as the Internet).

As used herein, the term "network" includes any cloud, cloud computing system, or electronic communications system or method which incorporates hardware and/or software components. Communication among the parties may be accomplished through any suitable communication channels, such as, for example, a telephone network, an extranet, an intranet, internet, point of interaction device (point of sale device, personal digital assistant (e.g., an IPHONE^{®} device, a BLACKBERRY^{®} device), cellular phone, kiosk, etc.), online communications, satellite communications, offline communications, wireless communications, transponder communications, local area network (LAN), wide area network (WAN), virtual private network (VPN), networked or linked devices, keyboard, mouse, and/or any suitable communication or data input modality. Moreover, although the system is frequently described herein as being implemented with TCP/IP communications protocols, the system may also be implemented using IPX, APPLETALK^{®} program, IP-6, NetBIOS, OSI, any tunneling protocol (e.g. IPsec, SSH, etc.), or any number of existing or future protocols. If the network is in the nature of a public network, such as the internet, it may be advantageous to presume the network to be insecure and open to eavesdroppers. Specific information related to the protocols, standards, and application software utilized in connection with the internet may be contemplated.

In various embodiments, the central controller 201 of the universal control system 200 from FIG. 2 and the universal communication device 300 can communicate through a short-range wireless technology standard utilizing radio waves (e.g., Bluetooth^{®}, or the like). The present disclosure is not limited in this regard.

In various embodiments, the universal communication device 300 can be electrically coupled to the central controller 201 of the universal control system 200 (e.g., via the serial port 332 of the universal communication device 300). In various embodiments, the universal communication device 300 can include more than one of the serial port 332. In this regard, the universal communication device 300 can be configured to be coupled to an electrically activated device 231 from FIG. 2 (e.g., through the wireless port 331 or through the serial port 332). The present disclosure is not limited in this regard.

In various embodiments, the universal communication device 300 further comprises a first analog input 306. For example, the first analog input 306 can comprise a fiber connector 313 (e.g., a square connector, a lucent connector, a multi-fiber connector, a straight tip connector, a ferrule connector, a mechanical transfer registered connector, a miniature square connector, a DIN connector, an E2000 connector etc.). In various embodiments, the fiber connector 313 is a square connector (i.e., having a square cross-sectional shape). In this regard, the fiber connector 313 of the first analog input 306 can be configured to interface with fiber connectors typical of aircraft cabins, in accordance with various embodiments. In various embodiments, the first analog input 306 further comprises a positive port 321 and a negative port 322. In this regard, the positive port 321 is configured to receive a positive pin of an electrical connector and the negative port 322 is configured to receive a negative pin of an electrical connector. In this regard, the first analog input 306 is configured to receive an electrical conductor of an alternating current (AC) load, in accordance with various embodiments.

In various embodiments, the universal communication device 300 further comprises a second analog input 308 in accordance with the first analog input 306. For example, the second analog input 308 can comprise a fiber connector 314, a positive port 323 and a negative port 324. In various embodiments, fiber connectors 313, 314 can be standard for aircraft cabin application. In various embodiments, the universal communication device 300 can include any number of analog inputs. In various embodiments, the universal communication device 300 can include between two and four analog inputs. In this regard, sub-systems of an aircraft cabin 100 from FIG. 1 can have multiple sensors having analog outputs. Accordingly, the universal communication device 300 can be configured to receive between two and four analog inputs, in accordance with various embodiments. In various embodiments, even if the universal communication device 300 includes multiple analog inputs, only a single analog input can be utilized (e.g., as shown in UCN-2 214 of universal control system 200 from FIG. 2), in accordance with various embodiments. In various embodiments, by having multiple analog inputs (e.g., analog input 306, 308, etc.), the universal communication device 300 can be modular, and utilized in numerous different applications, facilitating economies of scale and/or a reduced part count for products.

In various embodiments, the universal communication device includes a serial peripheral interface ("SPI") port 311 and an inter-integrated circuit ("I2C") port 312. In this regard, the universal communication device 300 can be adaptable for use with various communication protocols for use in sub-system of an aircraft cabin 100 of an aircraft 10 from FIG. 1. In various embodiments, the universal communication device 300 is configured for smart data loading, as described further herein. In various embodiments, an SPI port is configured to interface with an SPI connector to form an SPI communication interface for short-distance communication, primarily in embedded systems. Accordingly, the SPI port 311 can have a wide array of application sin an aircraft cabin 100 from Fig. 1. In various embodiments, an I2C port is configured to interface with an I2C pin to form an I2C circuit. An I2C circuit is a synchronous multi-master/multi-slave (controller/target), packet switched, single-ended serial communication bus. In various embodiments, I2C circuits are widely utilized in attaching lower-speed peripheral ICs to processors in short-distance , intra-board communication. Accordingly, an I2C port can have a wide array of applications in an aircraft cabin 100 from FIG. 1.

For example, with reference now to FIGs. 2 and 4, a process 400 performed by the central controller 201 of the universal control system 200 is illustrated, in accordance with various embodiments. The process 400 comprises receiving, by the central controller, a command to configure a universal communication node (step 402). In this regard, a user can select a newly identifiable universal communication node (e.g., UCN-1 212, UCN-2 214, UCN-N 216, etc.) from the control panel 205. In this regard, the control panel 205 can include a display device where a user, such as a crew member, can select a universal communication node (e.g., UCN-1 212, UCN-2 214, UCN-N 216, etc.) that has been installed in the aircraft cabin 100 from FIG. 1.

In response to the user selecting the UCN through the control panel 205 in step 402, the process 400 further comprises commanding, by the central controller 201, testing of the universal communication node (step 404). In this regard, the central controller 201 can transmit (e.g., wirelessly or wired) a signal to the selected universal communication node (e.g., UCN-1 212, UCN-2 214, UCN-N 216, etc.) to test a sub-system of associated with the universal communication node). In response to transmitting the signal in step 404, the universal communication node can conduct a test to attempt to determine the sub-system associated with the universal communication node. In various embodiments, the test can include recording and transmitting sensor data from a sensor (or a plurality of sensors) coupled to the universal communication node, the test can be waiting for a sensor to be triggered and sending information associated with the event that triggered the sensor and the data measured to the central controller 201, or the like. The present disclosure is not limited in this regard. A "sensor trigger" as referred to herein is an event that causes a sensor to start a measurement cycle. For example, a sensor trigger can comprise a time-based trigger (e.g., an internal clock of a sensor), an encoder based trigger (e.g., for displacement and profile sensors), an external input trigger (e.g., from an external source such as a photocell or the like), a software trigger (e.g., running over a sensor network), or the like. The present disclosure is not limited in this regard.

In various embodiments, the process 400 further comprises comparing, by the central controller 201, the test data to an attribute table (step 406). In various embodiments, the attribute table includes data corresponding to respective sub-systems of an aircraft. For example, a data received from an occupancy sensor for a lavatory may include a typical measurement profile, data received from a motion sensor for a lavatory may have a typical measurement profile, data received from a position sensor for a galley or inventory management system may include a typical profile etc. In this regard, the central controller 201 can compare data received from the testing requested in step 404 and compare the data to an attribute table (e.g., a data lookup table or the like) to determine if the sub-system can be identified from the testing data, in accordance with various embodiments. In various embodiments, the typical measurement profile for each respective sensor can be generated externally (e.g., from a maintenance engineer or the like) and uploaded to the central controller. Stated another way, the attribute table can be updated as desired as sub-systems are added or modified, in accordance with various embodiments.

In various embodiments, if the testing data matches an attribute in the attribute table (step 408), the process 400 further comprises identifying, by the central controller 201, a sub-system for the universal communication node (step 410).

In various embodiments, if the central controller 201 cannot identify the sub-system of the aircraft based on the test data and the attribute table in step 408 (i.e., if two universal communication nodes cannot be differentiated), the process 400 can further comprise receiving a plurality of sensor triggers (step 412). In this regard, if the sub-system is not identified initially, the central controller can monitor the sub-system until the sub-system can be identified by detecting a pattern of the sensor triggers for the sub-system. For example, a respective sensor can be utilized in two different sub-systems, but have different sensor triggers based on what the sensor is monitoring or trying to detect. In this regard, by analyzing a pattern of the sensor triggers, the central controller 201 can identify the sub-system for the universal communication node (step 414).

In various embodiments, in response to step 410 or step 414, the process 400 can further comprise configuring, by the central controller, the universal communication node for the control panel 205. For example, the central controller 201 can label the respective sub-system of the aircraft, include any potential control options (e.g., if there is an electrically activated device such as electrically activated device 231 for the respective sub-system), provide a corresponding display for the sub-system (e.g., a graphic level bar for a potable water system level or the like). In this regard, the central controller 201 can be adaptable to identify, label, and configure a universal communication node without PINS that are typically utilized for identification of local controllers. In various embodiments, the smart loading of process 400 can reduce a size of the universal communication device 300 from FIG. 3 by not having pin ports for identification. Accordingly, the universal communication device 300 from FIG. 3 can have a compact form factor. In various embodiments, the process 400 can be less prone to installation errors relative to typical identification systems for sub-systems, in accordance with various embodiments.

With reference now to FIGs. 3 and 5, a process 500 performed by the local controller 301 of the universal communication device 300 during the process 400 from FIG. 4, in accordance with various embodiments. The process 500 comprises receiving, by the local controller 301 (e.g., through the wireless port 331 or the serial port 332), a testing command from a central controller (step 502).

The process 500 further comprises receiving, by the local controller 301, sensor data from a sensor in electrical communication with the local controller (step 504). In various embodiments, the sensor data can be received in response to the sensor being triggered by a sensor trigger in a manner described previously herein. In various embodiments, the local controller 301 can be configured to record and transmit sensor data in response to receiving the testing command, without the sensor being triggered. In this regard, in response to receiving the testing command in step 502, the local controller can actively record and transmit sensor data without the sensor being triggered, in accordance with various embodiments. However, the present disclosure is not limited in this regard. For example, in response to the local controller 301 and the central controller 201 from FIG. 2 pairing (i.e., being able to communicate), the local controller 301 can be configured to transmit data to the central controller any time that a sensor coupled to the local controller 301 is triggered. In this regard, the central controller 201 can be configured to wait for the sensor to be triggered and identify the sub-system as described herein after the sensor is triggered as opposed to testing the sub-system as described previously herein. The present disclosure is not limited in this regard.

In various embodiments, the process 500 further comprises transmitting, by the local controller 301, the sensor data to the central controller (step 506). In this regard, in response to the local controller 301 receiving sensor data that is measured from a sensor coupled thereto, the local controller transmits (e.g., through the wireless port 331 or the serial port 332), the sensor data to the central controller (step 506).

In various embodiments, the process 500 can further comprise receiving, by the local controller 301, a monitor command from the central controller (step 508). In this regard, after a local controller 301 of a universal communication device 300 is configured in accordance with the process 400 of FIG. 4, the local controller 301 can be commanded to monitor the sub-system that is identified based on how the sub-system is configured from step 416 of process 400. In various embodiments, a monitor command may be received from the central controller in step 508 in response to the central controller being unable to identify the sub-system associated with the universal communication device 300. In this regard, the central controller can command the local controller to send data related to triggering of the sensor to determine a pattern associated with the sensor triggers, in accordance with step 414 of process 400 from FIG. 4.

In various embodiments, the process 500 further comprises transmitting, by the local controller 301, a sensor trigger to the central controller (step 510). In this regard, in response to receiving a monitor command in step 508, the local controller can transmit a sensor trigger, in addition to sensor data, each time a sensor coupled to the local controller 301 is triggered, in accordance with various embodiments. Accordingly, the central controller can determine a pattern from the sensor triggers and identify the sub-system in the aircraft cabin 100 of the aircraft 10 as described previously herein.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.
Finally, any of the above-described concepts can be used alone or in combination with any or all the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible considering the above teaching.

## Claims

1. A universal communication device, comprising:
a first fiber connector including a first positive analog input port and a first negative analog input port;
a second fiber connector including a second positive analog input port and a second negative analog input port;
a serial peripheral interface (SPI) port;
an inter-integrated circuit (I2C) port;
a first output port; and
a controller in electrical communication with the first fiber connector, the second fiber connector, the SPI port, the I2C port, and the first output port.

2. The universal communication device of claim 1, wherein the controller is configured to:
receive a testing command from a central controller;
receive sensor data in response to a sensor being triggered; and
transmit the sensor data to the central controller.

3. The universal communication device of claim 2, wherein the controller is further configured to:
receive a monitor command from the central controller; and
monitor a sensor trigger pattern of the sensor in response to receiving the monitor command.

4. The universal communication device of claim 3, wherein the controller is further configured to transmit the sensor trigger pattern of the sensor to the central controller.

5. The universal communication device of claim 3 or 4, wherein the universal communication device is configured to transmit the sensor trigger pattern through the first output port.

6. The universal communication device of any preceding claim, wherein the first output port is a wireless output port.

7. The universal communication device of any preceding claim, further comprising a second output port, the second output port comprising a serial output port.

8. An article of manufacture including a tangible, non-transitory memory configured to communicate with a processor, the tangible, non-transitory memory having instructions stored thereon that, in response to execution by the processor, cause the processor to perform operations comprising:
receiving, by the processor, sensor data from a universal communication node;
comparing, by the processor, the sensor data to an attribute table corresponding to a plurality of sub-systems of an aircraft; and
identifying, by the processor, a sub-system in the plurality of sub-systems corresponding to the universal communication node.

9. The article of manufacture of claim 8, wherein the identifying the sub-system is based on matching the sensor data to the sub-system in the attribute table, and/or
wherein the attribute table includes expected attributes for each sub-system in the plurality of sub-systems in the aircraft.

10. The article of manufacture of claim 8 or 9, wherein the operations further comprise configuring, by the processor, the universal communication node for a control panel in an aircraft cabin, and/or
wherein the operations further comprise receiving, by the processor, a command to configure the universal communication node prior to receiving the sensor data, and/or
wherein the operations further comprise commanding, by the processor, testing of the universal communication node prior to receiving the sensor data.

11. The article of manufacture of any of claims 8 to 10, wherein in response to the processor not finding a match in the attribute table to the sensor data, the processor identifies the sub-system in the plurality of sub-systems based on a pattern of sensor triggers received from a sensor electrically coupled to the universal communication node.

12. An article of manufacture including a tangible, non-transitory memory configured to communicate with a processor, the tangible, non-transitory memory having instructions stored thereon that, in response to execution by the processor, cause the processor to perform operations comprising:
receiving, by a local controller, a testing command;
transmitting, by the local controller, test data from the local controller to a central controller; and
in response to transmitting the test data to the central controller, a sub-system in an aircraft cabin is identified by the central controller.

13. The article of manufacture of claim 12, wherein the local controller is configured by the central controller in response to the central controller identifying the sub-system, and/or
wherein the test data is received from a sensor coupled to the local controller, optionally wherein the test data includes sensor triggers of the sensor.

14. The article of manufacture of claim 12 or 13, wherein the operations further comprise receiving a monitoring command from the central controller in response to the central controller being unable to identify the sub-system based on the test data.

15. The article of manufacture of claim 14, wherein the local controller transmits sensor triggers of a sensor coupled to the local controller to the central controller in response to receiving the monitoring command.
